# EUROPEAN PATENT SPECIFICATION

(11) **EP 3 819 265 B1**
(45) Date of publication and mention of the grant of the patent: **09.11.2022**
(21) Application number: 20205722.0
(22) Date of filing: 04.11.2020
(51) Int. Cl.: C02F 5/08, C02F 1/68, C02F 1/00

(54) **FILTERING DEVICE FOR PROVIDING A HOUSEHOLD APPLIANCE WITH FEED WATER COMING FROM A WATER SUPPLY NETWORK**
FILTERGERÄT ZUR LIEFERUNG EINES HAUSHALTSGERÄTS MIT WASSER AUS EINEM WASSERVERSORGUNGSNETZ
DISPOSITIF DE FILTRAGE POUR FOURNIR UN APPAREIL MÉNAGER EN EAU PROVENANT D'UN RÉSEAU D'ALIMENTATION EN EAU

(30) Priority: 06.11.2019 IT 201900020440
(43) Date of publication of application: 12.05.2021
(73) Proprietor: Pezzotti, Fabrizio, 02100 Rieti (IT)
(72) Inventor: PEZZOTTI, Fabrizio, 02100 RIETI (IT)
(74) Representative: Carangelo, Pierluigi

(56) References cited:
- EP-A1- 1 604 716
- EP-A2- 2 623 468
- WO-A1-2012/042531
- JP-B2- 4 842 056
- US-A1- 2003 106 845
- US-B1- 6 485 641
- US-B1- 9 850 153

## Description

### FIELD OF THE INVENTION

The present invention relates to the technical field of hydraulic filters and, in particular, it relates to a filtering device for providing a household appliance, such as, for example, a washing machine or a dishwasher, with feed water coming from a water supply network.

### BACKGROUND ART

As is known, household appliances exist, such as, for example, washing machines or dishwashers, which require a connection to a water supply network to receive the feed water necessary for the operation thereof.

It is also known that the water transported and provided by water supply networks contains solid particles, for example, particles of earth, sand, rust, algae and sediments which, over time, may damage the household appliances or may at least accelerate the wear thereof. The aforesaid solid particles may also compromise the quality of the washing. Mechanical filtering devices have therefore been developed which are installed in between the water supply network and the household appliances. For example, patent application EP2317202A1 describes a connector for fastening a pipe to a water supply network, having a mesh filter integrated in the connector. Other filtering devices for household appliances are described in EP 2623468A2 US6485641B1, EP1604716A1 and JP4842056B2.

The water provided by water supply networks also contains quantities of limescale which, in the long run, may damage the household appliances, as well as compromise, in some cases, the good result of the washing. However, the filtering devices used to filter sand or rust have the drawback of not being capable of reducing the limescale content of the feed water provided to household appliances. For this reason, chemical additives have been developed which users must periodically employ to remove or reduce the limescale accumulated inside the household appliances. Such additives are expensive and harmful to the environment.

It is the object of the present description to provide a filtering device for providing a household appliance with feed water coming from a water supply network which allows to solve, or at least partially reduce, the drawbacks described above with reference to the filtering devices of the prior art.

Such an object is achieved by a filtering device as generally defined in claim 1. Preferred and advantageous embodiments of the aforesaid filtering device are defined in the appended dependent claims.

The invention will be better understood from the following detailed description of a particular embodiment given by way of explanation and, therefore, not by way of limitation, with reference to the accompanying drawings briefly described in the following paragraph.

### BRIEF DESCRIPTION OF THE DRAWINGS

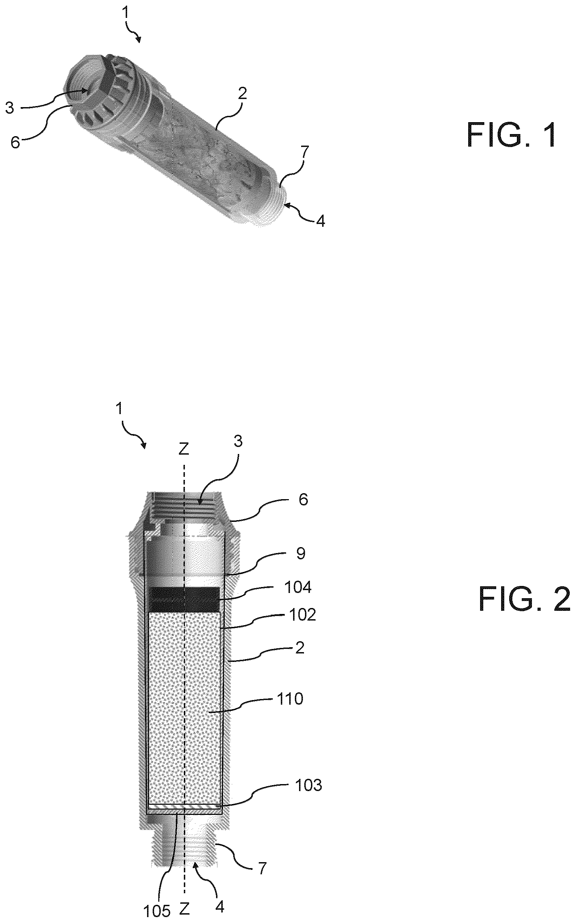

Figure 1 shows an axonometric diagrammatic view of a non-limiting embodiment of a filtering device for providing a household appliance with feed water coming from a water supply network.
Figure 2 shows a diagrammatic side sectional view of the filtering device of Figure 1.

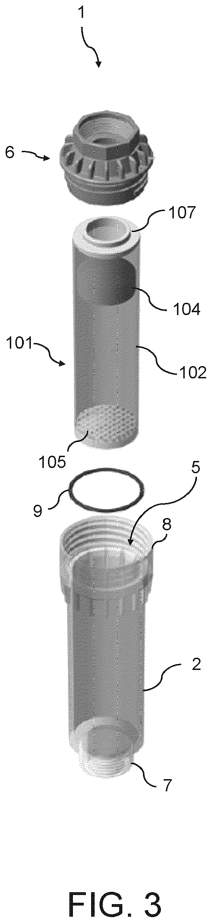

Figure 3 shows an exploded axonometric diagrammatic view of the filtering device of Figure 1, in which a filtering cartridge is visible.

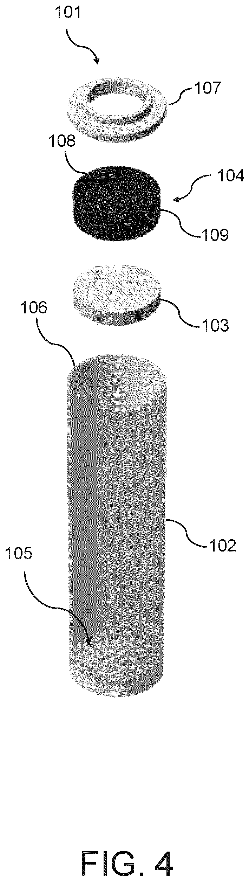

Figure 4 shows an exploded axonometric diagrammatic view of the filtering cartridge of Figure 3.

### DETAILED DESCRIPTION

The attached Figures show an exemplary and non-limiting embodiment of a filtering device 1 for providing a household appliance with feed water coming from a water supply network. The aforesaid household appliance is, for example, without introducing any limitation, a washing machine or a dishwasher.

Conveniently, the filtering device 1 is a separate device external to the household appliance, so that it may be easily replaced and/or refilled and/or inspected. This further advantageously allows to associate the filtering device 1 also with household appliances not initially provided with such filtering device 1.

The filtering device 1 comprises a first internally hollow containment body 2, having an inlet port 3 for the inlet of water to be filtered, an outlet port 4 for the outlet of filtered water and a housing seat 5 interposed between the inlet port 3 and the outlet port 4. The containment body 2 is, for example, made of polycarbonate.

Preferably, the containment body 2 is a body with a cylindrical or substantially cylindrical shape, having an axis Z-Z axis having a mainly longitudinal extension.

The filtering device 1 further comprises a first connection element 6 adapted and configured to connect the containment body 2 to a water supply network, preferably to the tap of a domestic water supply network. The first connection element 6 comprises, for example, a thread, for example, a female thread, for example, provided for directly connecting the containment body 2 to a tap.

In accordance with an advantageous embodiment, the containment body 2 is provided with an access opening 8 and the first connection element 6 is a plug which at least partially occludes the access opening 8. For example, the containment body 2 comprises a thread and the first connection element 6 comprises a complementary counter-thread, so that the connection element 6 may be removably fastened to the containment body 2 by means of screwing. In accordance with a preferred embodiment, a gasket, for example an O-ring 9, is operatively interposed between the containment body 2 and the first connection element 6. In the example, an end portion of the containment body 2 comprises a female thread and an external side wall of the connection element 6 comprises a male thread, so that the aforesaid external side wall may be screwed into the female thread of the containment body 2.

The filtering device 1 further comprises a second connection element 7 adapted and configured to connect the containment body 2 to the household appliance, preferably by means of a connection pipe not shown in the attached Figures. The second connection element 7 comprises, for example, a thread, for example, a male thread, for example, provided for directly connecting the containment body 2 to a connection pipe. The second connection element 7 is preferably integrated in the containment body 2 and is, for example, a thread provided on an end portion of the containment body 2.

The filtering device 1 further comprises a filtering cartridge 101 accommodated inside the housing seat 5 of the first containment body 2. Preferably, the filtering cartridge 101 is axially interposed between the inlet port 3 and the outlet port 4. For the purposes of the present description, the term axially refers to an axis having a mainly longitudinal extension of the containment body 2, which, in the Figures, is the axis Z-Z. In accordance with an advantageous embodiment, the filtering cartridge 101 extends along an axis having a mainly longitudinal extension, parallel or coaxial with respect to the axis having a mainly longitudinal extension X-X of the containment body 2.

The filtering cartridge 101 comprises a second containment body 102 and a salt 110, adapted to soften the feed water, accommodated inside the second containment body 102.

Preferably, the aforesaid filtering cartridge 101 is a removable cartridge, so that the filtering cartridge 101 is interchangeable, so that it may be replaced when the salt 110 runs out.

In accordance with an advantageous embodiment, the salt 110 is, or contains, a silicopolyphosphate, preferably a calcium and sodium silicopolyphosphate. The salt 110 is, for example, a loose salt in crystals having a particle size in the range 2mm - 5mm. Conveniently, salt 110 is a salt for food use.

The filtering device 1 further comprises at least one first mechanical filter 103 operatively interposed between the inlet port 3 and the outlet port 4 of the containment body 2.

In accordance with an advantageous embodiment, the first mechanical filter 103 is accommodated inside the second containment body 102. Thereby, the mechanical filter 103 is automatically replaced by changing the filtering cartridge 101.

In accordance with an advantageous embodiment, the first mechanical filter 103 is a micrometric filter. For example, such micrometric filter 103 allows to retain in the filtering cartridge 101 solid particles having a size of the order of 50 microns or more, and to let solid particles of a smaller size pass through.

In accordance with an advantageous embodiment, the first mechanical filter 103 is or comprises a polyester sheet, preferably a polyester disc. Thereby, the first mechanical filter 103 is thin and cost effective, and may be easily shaped, for example, it may be obtained by cutting or punching a larger polyester sheet from which numerous mechanical filters 103 may be obtained.

In accordance with an advantageous embodiment, the salt 110 rests on the first mechanical filter 103. In the example shown in the Figures, the first mechanical filter 103 rests on the bottom wall of the second containment body 102.

The filtering device 1 further comprises a salt level indicator 104 slidably accommodated inside the second containment body 102. Preferably, the salt level indicator 104 rests, directly or indirectly, on top of the salt 110. In this regard, it should be noted that, although, with reference to the example shown in the Figures, an embodiment has been described in which inside the filtering cartridge the salt 110 rests on the first mechanical filter 103 and the level indicator 104 rests on the salt 110, it is possible to provide alternative embodiments with a different order of positioning of the aforesaid three elements. For example, it is possible to interpose the first mechanical filter 103 between the salt 110 and the level indicator 104. In a further embodiment variant not shown in the Figures, the filtering cartridge 101 comprises a further salt level indicator, equal or similar to the salt level indicator 104 described above, slidably accommodated inside the second containment body 102, the first mechanical filter 103 being interposed between the level indicator 104 and the aforesaid further level indicator. In such embodiment, one of the two level indicators 104 therefore rests on the salt 110.

The first containment body 2 and the second containment body 102 comprise side walls which are at least partially transparent to make the salt level indicator 104 visible from the outside of the filtering device 1. Preferably, the salt level indicator 104 has a rigid body which is colored with a vibrant color, for example red, blue, green or orange. Preferably, a graduated scale is provided on the wall of the second containment body 102 and/or on the wall of the first containment body.

In accordance with a preferred embodiment, the salt level indicator 104 is made of polypropylene.

The salt level indicator 104 has a body comprising a grid wall 108 having a plurality of holes so as to form a second mechanical filter. Preferably, said second mechanical filter has a selectivity lower than that of the first mechanical filter 103. Conveniently, the first mechanical filter 103 has a selectivity of an order of magnitude lower than that of the second filter. For example, the aforesaid second mechanical filter allows to retain solid particles having a size of the order of 500 microns or more and to let solid particles of a smaller size pass through.

Preferably, the salt level indicator 104 comprises a side wall 109 which surrounds the grid wall 108 and which is thicker than the grid wall 108. Said side wall 109 is preferably perpendicular to the grid wall 108. Thereby, the salt level indicator 104 may slide without getting stuck inside the second containment body 102. The aforesaid side wall 109 is, for example, a cylindrical wall.

In accordance with an advantageous embodiment, the second containment body 102 extends between a grid wall 105 having a plurality of holes and an access opening 106, and the filtering cartridge 101 comprises a perforated cover 107 fastened to the second containment body 102 to partially occlude the access opening 106.

From the above, it is apparent that a filtering device 1 of the type described above allows fully achieving the set objects in terms of overcoming the drawbacks of the filtering devices of the prior art.

In fact, by virtue of the dissolution of the softener salt contained in the filtering cartridge, the formation and deposit of limescale on elements such as the heating resistor and the solenoid valve is considerably slowed down, making the water less hard.

The first mechanical filter 103 retains all the materials which the pipes may directly release upon the passage of water, such as sand, rust, algae and sediments, for example, particles larger than 50 µm.

Furthermore, the absence and/or reduction of limescale allows to save on detergents, softeners, specific descaling products and on the use of electricity, producing a great economic advantage in addition to immediate results on washings and greater respect for the environment.

The use of a salt such as a silicopolyphosphate, i.e., the union of a polyphosphate with a silicate, is particularly advantageous. In fact, the silicate acts on the pH of the water and has an immediate action on the metal parts of the household appliances, not allowing the water to corrode them.

Furthermore, the filtering device 1 is easy to install, does not require the intervention of a specialist and does not require any type of specific equipment. The replacement of the filtering cartridge 101 is extremely easy and may be carried out independently.

Furthermore, by virtue of the indicator 104, the level of consumption/wear of the salts contained in the filtering device 1 is easily visible by a user.

Without prejudice to the principle of the invention, the embodiments and the manufacturing details may be broadly varied with respect to the above description disclosed by way of a non-limiting example, without departing from the scope of the invention as defined in the appended claims.

## Claims

1. A filtering device (1) for providing a household appliance, in particular, a washing machine or a dishwasher, with feed water coming from a water supply network, comprising:
- a first internally hollow containment body (2), having an inlet port (3) for the inlet of water to be filtered, an outlet port (4) for the outlet of filtered water and a housing seat (5) interposed between the inlet port (3) and the outlet port (4);
- a first connection element (6) adapted and configured to connect the containment body (2) to a water supply network;
- a second connection element (7) adapted and configured to connect the containment body (2) to the household appliance;
- a filtering cartridge (101) accommodated inside the housing seat (5) of the first containment body (2) and comprising a second containment body (102) and a salt (110), adapted to soften the feed water, accommodated inside the second containment body (102);
- at least one first mechanical filter (103) operatively interposed between the inlet port (3) and the outlet port (4) ;
- a salt level indicator (104) slidably accommodated inside the second containment body (102) and wherein the first containment body (2) and the second containment body (102) comprise side walls which are at least partially transparent to make the salt level indicator (104) visible from the outside of the filtering device (1), wherein the salt level indicator (104) has a body comprising a grid wall (108) having a plurality of holes so as to form a second mechanical filter.

2. A filtering device (1) according to claim 1, wherein said salt is, or contains, a silicopolyphosphate, preferably a calcium and sodium silicopolyphosphate.

3. A filtering device (1) according to claims 1 or 2, wherein the first mechanical filter (103) is accommodated inside the second containment body (102).

4. A filtering device (1) according to any one of the preceding claims, wherein the first mechanical filter (103) is a micrometric filter.

5. A filtering device (1) according to any one of the preceding claims, wherein the first mechanical filter (103) is, or comprises, a polyester sheet.

6. A filtering device (1) according to claim 1, wherein said second mechanical filter has a selectivity lower than that of the first mechanical filter (103).

7. A filtering device (1) according to any one of the previous claims, wherein the salt level indicator (104) comprises a side wall (109) which surrounds the grid wall (108) and which is thicker than the grid wall (108) .

8. A filtering device (1) according to any one of the previous claims, comprising a further salt level indicator slidably accommodated inside the second containment body (102), the first mechanical filter (103) being interposed between said level indicator (104) and the further level indicator.

9. A filtering device (1) according to any one of the preceding claims, wherein the filtering cartridge (101) is axially interposed between the inlet port (3) and the outlet port (4).

10. A filtering device (1) according to claim 9, wherein the filtering cartridge (101) extends along an axis having a mainly longitudinal extension, parallel or coaxial with respect to the axis having a mainly longitudinal extension (X-X) of the containment body (2) .

11. A filtering device (1) according to any one of the preceding claims, wherein the second containment body (102) extends between a grid wall (105) having a plurality of holes and an access opening (106), wherein the filtering cartridge (101) comprises a perforated cover (107) fastened to the second containment body (102) to partially occlude the access opening (106).

12. A kit of parts comprising a household appliance, in particular, a washing machine or a dishwasher, and further comprising a filtering device (1) according to any one of the preceding claims, wherein the filtering device (1) is adapted and configured to be installed outside the household appliance to be operatively interposed between the household appliance and a feed water supply network.

## Patentansprüche

1. Filtergerät (1) zur Lieferung eines Haushaltsgeräts, insbesondere einer Waschmaschine oder eines Geschirrspülers, mit Wasser aus einem Wasserversorgungsnetz, umfassend:
- einen ersten, innen hohlen Behälterkörper (2), der eine Einlassöffnung (3) für den Einlass von zu filterndem Wasser, eine Auslassöffnung (4) für den Auslass von gefiltertem Wasser und einen Gehäusesitz (5) aufweist, der zwischen der Einlassöffnung (3) und der Auslassöffnung (4) eingefügt ist;
- ein erstes Verbindungselement (6), das angepasst und konfiguriert ist, um den Behälterkörper (2) mit einem Wasserversorgungsnetz zu verbinden;
- ein zweites Verbindungselement (7), das angepasst und konfiguriert ist, um den Behälterkörper (2) mit dem Haushaltsgerät zu verbinden;
- eine Filterkartusche (101), die in dem Gehäusesitz (5) des ersten Behälterkörpers (2) untergebracht ist, und einen zweiten Behälterkörper (102) und ein Salz (110) umfasst, das angepasst ist, um das Wasser zu enthärten, das innerhalb des zweiten Behälterkörpers (102) untergebracht ist;
- mindestens einen ersten mechanischen Filter (103), der funktionsfähig zwischen dem Einlassanschluss (3) und dem Auslassanschluss (4) eingefügt ist;
- eine Salzfüllstandsanzeige (104), die verschiebbar innerhalb des zweiten Behälterkörpers (102) untergebracht ist, und wobei der erste Behälterkörper (2) und der zweite Behälterkörper (102) Seitenwände umfassen, die mindestens teilweise transparent sind, um die Salzfüllstandsanzeige (104) von der Außenseite der Filtervorrichtung (1) sichtbar zu machen, wobei die Salzfüllstandsanzeige (104) einen Körper aufweist, der eine Gitterwand (108) umfasst, die eine Vielzahl von Löchern aufweist, um einen zweiten mechanischen Filter zu bilden.

2. Filtergerät (1) nach Anspruch 1, wobei das Salz ein Silicopolyphosphat, vorzugsweise ein Calcium- und Natriumsilicopolyphosphat, ist oder enthält.

3. Filtergerät (1) nach Anspruch 1 oder 2, wobei der erste mechanische Filter (103) innerhalb des zweiten Behälterkörpers (102) untergebracht ist.

4. Filtergerät (1) nach einem der vorhergehenden Ansprüche, wobei der erste mechanische Filter (103) ein mikrometrischer Filter ist.

5. Filtergerät (1) nach einem der vorhergehenden Ansprüche, wobei der erste mechanische Filter (103) eine Polyesterfolie ist oder umfasst.

6. Filtergerät (1) nach Anspruch 1, wobei der zweite mechanische Filter eine geringere Selektivität aufweist als der erste mechanische Filter (103).

7. Filtergerät (1) nach einem der vorhergehenden Ansprüche, wobei die Salzfüllstandsanzeige (104) eine Seitenwand (109) umfasst, die die Gitterwand (108) umgibt, und die dicker ist als die Gitterwand (108).

8. Filtergerät (1) nach einem der vorhergehenden Ansprüche, das eine weitere Salzfüllstandsanzeige umfasst, die verschiebbar innerhalb des zweiten Behälterkörpers (102) untergebracht ist, wobei der erste mechanische Filter (103) zwischen der Füllstandsanzeige (104) und der weiteren Füllstandsanzeige eingefügt ist.

9. Filtergerät (1) nach einem der vorhergehenden Ansprüche, wobei die Filterkartusche (101) axial zwischen der Einlassöffnung (3) und der Auslassöffnung (4) eingefügt ist.

10. Filtergerät (1) nach Anspruch 9, wobei sich die Filterkartusche (101) entlang einer Achse erstreckt, die eine hauptsächlich in Längsrichtung verlaufende Ausdehnung aufweist, parallel oder koaxial in Bezug auf die Achse, die eine hauptsächlich in Längsrichtung verlaufende Ausdehnung (X-X) des Behälterkörpers (2) aufweist.

11. Filtergerät (1) nach einem der vorhergehenden Ansprüche, wobei sich der zweite Behälterkörper (102) zwischen einer Gitterwand (105), die eine Vielzahl von Löchern aufweist, und einer Zugangsöffnung (106) erstreckt, wobei die Filterkartusche (101) eine perforierte Abdeckung (107) umfasst, die an dem zweiten Behälterkörper (102) befestigt ist, um die Zugangsöffnung (106) teilweise zu verschließen.

12. Bauteilesatz, der ein Haushaltsgerät umfasst, insbesondere eine Waschmaschine oder einen Geschirrspüler, und der ferner ein Filtergerät (1) nach einem der vorhergehenden Ansprüche umfasst, wobei das Filtergerät (1) angepasst und konfiguriert ist, um außerhalb des Haushaltsgeräts installiert zu werden, um funktionsfähig zwischen dem Haushaltsgerät und einem Wasserversorgungsnetz eingefügt zu werden.

## Revendications

1. Dispositif de filtrage (1) pour fournir un appareil ménager, notamment une machine à laver ou un lave-vaisselle, en eau provenant d'un réseau d'alimentation en eau, comprenant :
- un premier corps de confinement creux à l'intérieur (2), ayant un orifice d'entrée (3) pour l'entrée d'eau à filtrer, un orifice de sortie (4) pour la sortie d'eau filtrée et un support de boîtier (5) interposé entre l'orifice d'entrée (3) et l'orifice de sortie (4) ;
- un premier élément de raccordement (6) adapté et conçu pour raccorder le corps de confinement (2) à un réseau d'alimentation en eau ;
- un second élément de raccordement (7) adapté et conçu pour raccorder le corps de confinement (2) à l'appareil ménager ;
- une cartouche filtrante (101) logée à l'intérieur du support de boîtier (5) du premier corps de confinement (2) et comprenant un second corps de confinement (102) et un sel (110), adapté pour adoucir l'eau d'alimentation, logé à l'intérieur du second corps de confinement (102) ;
- au moins un premier filtre mécanique (103) interposé fonctionnellement entre l'orifice d'entrée (3) et l'orifice de sortie (4) ;
- un indicateur de niveau de sel (104) logé de manière coulissante à l'intérieur du second corps de confinement (102) et le premier corps de confinement (2) et le second corps de confinement (102) comprenant des parois latérales qui sont au moins partiellement transparentes pour rendre l'indicateur de niveau de sel (104) visible de l'extérieur du dispositif de filtrage (1), l'indicateur de niveau de sel (104) ayant un corps comprenant une paroi grillagée (108) comportant une pluralité de trous de manière à former un second filtre mécanique.

2. Dispositif de filtrage (1) selon la revendication 1, dans lequel ledit sel est, ou contient, un silicopolyphosphate, de préférence un silicopolyphosphate de calcium et de sodium.

3. Dispositif de filtrage (1) selon les revendications 1 ou 2, dans lequel le premier filtre mécanique (103) est logé à l'intérieur du second corps de confinement (102).

4. Dispositif de filtrage (1) selon l'une quelconque des revendications précédentes, dans lequel le filtre mécanique (103) est un filtre micrométrique.

5. Dispositif de filtrage (1) selon l'une quelconque des revendications précédentes, dans lequel le premier filtre mécanique (103) est, ou comprend, une feuille de polyester.

6. Dispositif de filtrage (1) selon la revendication 1, dans lequel ledit second filtre mécanique a une sélectivité inférieure à celle du premier filtre mécanique (103).

7. Dispositif de filtrage (1) selon l'une quelconque des revendications précédentes, dans lequel l'indicateur de niveau de sel (104) comprend une paroi latérale (109) qui entoure la paroi grillagée (108) et qui est plus épaisse que la paroi grillagée (108).

8. Dispositif de filtrage (1) selon l'une quelconque des revendications précédentes, comprenant un autre indicateur de niveau de sel logé de manière coulissante à l'intérieur du second corps de confinement (102), le premier filtre mécanique (103) étant interposé entre ledit indicateur de niveau (104) et l'autre indicateur de niveau.

9. Dispositif de filtrage (1) selon l'une quelconque des revendications précédentes, dans lequel la cartouche filtrante (101) est interposée axialement entre l'orifice d'entrée (3) et l'orifice de sortie (4).

10. Dispositif de filtrage (1) selon la revendication 9, dans lequel la cartouche filtrante (101) s'étend selon un axe ayant une extension principalement longitudinale, parallèle ou coaxiale par rapport à l'axe ayant une extension principalement longitudinale (X-X) du corps de confinement (2).

11. Dispositif de filtrage (1) selon l'une quelconque des revendications précédentes, dans lequel le second corps de confinement (102) s'étend entre une paroi grillagée (105) ayant une pluralité de trous et une ouverture d'accès (106), dans lequel la cartouche filtrante (101) comprend un couvercle perforé (107) fixé au second corps de confinement (102) pour obstruer partiellement l'ouverture d'accès (106).

12. Kit de pièces comprenant un appareil ménager, en particulier, une machine à laver ou un lave-vaisselle, et comprenant en outre un dispositif de filtrage (1) selon l'une quelconque des revendications précédentes, dans lequel le dispositif de filtrage (1) est adapté et conçu pour être installé à l'extérieur de l'appareil ménager pour être interposé fonctionnellement entre l'appareil ménager et un réseau d'alimentation en eau.
